# EUROPEAN PATENT APPLICATION

(11) **EP 1 130 882 A2**
(43) Date of publication of application: **05.09.2001**
(21) Application number: 00110378.7
(22) Date of filing: 15.05.2000
(51) Int. Cl.: H04M 1/15

(54) **Wire winding box for using in short distance**

(30) Priority: 29.02.2000 US 515211
(71) Applicant: Liao, Sheng-Hsin, Taipei, Hsien (TW)
(72) Inventor: Liao, Sheng-Hsin, Taipei, Hsien (TW)
(74) Representative: Viering, Jentschura & Partner

(57) **Abstract**

A wire winding box for using in a short distance is disclosed. A case with single receiving tank or two receiving tanks are pivotally installed with a rotary disk which is driven by a spiral spring. A communication wire firstly passes through a pivotal shaft for engaging with the rotary disk, then is bent through a proper angle, then is pulled to a ring at the rotary disk, and then it is pulled out from the line outlet or is wound. Therefore, as the rotary disk rotates, the wire will wound around the ring for sliding and then wind around the pivotal shaft and the ring so as to be pulled out or rewound rapidly. Thereby, no conductive device is required to be placed in the wire winding box. The manufacturing process can be reduced greatly for mass production. Besides, a swingable piece and a ratchet wheel which are overlapped partially and can swing freely are pivotally installed in the receiving tank aside the rotary disk. Accordingly, through the regular action of alternatively pulling and releasing, the wire can be positioned and rewound, and the user may clearly know the action of the wire. Therefore, the present invention can be used easily and conveniently.

## Description

### FIELD OF THE INVENTION

The present invention relates to a wire winding box, and especially to wire winding box for using in a short distance, which can be used to various wired communication devices, the communication wire therein can be pulled out freely and can be rewound for preventing an intricate phenomenon.

### BACKGROUND OF THE INVENTION

The current computers, modems, telephones, fax machines and other communication devices are necessary to be arranged with proper communication wires for connection. In order to avoid too much and too long communication wires to wind with one another. The inventor of the present invention has invented with various wire winding box, such as Taiwan Patent Nos. 09/332099, 09/349772, 09/377422, 09/377421, etc. Wherein, most of the wire winding boxes include a case, a rotary disk, a spiral spring and a communication wire. The spiral spring is firmly secured with rotary disk so that the communication wire winding on the rotary disk has the function of rewinding and winding. Since the communication wire is necessary to retain with an electric connection as it is pulled out or rewound. Therefore, the wire winding box is installed with conductive device with various types. For example, a plurality of conductive rings which are concentric but have different diameters are installed on the surface of the rotary disk, and another rotary disk or the case is installed with a plurality of conductive elastic pieces or steel pieces on a conductive ring. As the rotary disk rotates, the electric connection in the communication wire can not be effectively operation. However, since the conductive structure formed by the conductive elastic pieces, conductive ring, steel balls, etc has many components with very small volumes. Thus, it is very difficult to assembly it. In using, a bad contact easily occurs so as not to be used for a longer time.

Besides, in the conventional wire winding box, as the communication wire is pulled out, it is possible that the communication wire is in a tight tension due to the large elastic force of a spiral spring so that it can not retain a proper and fixed length to be exposed out. This is a big trouble to the user. Therefore, the applicant further invents many wire winding boxes by which the pulled out communication wire can be positioned properly. For example, Taiwan Patent Nos. 09/332099 and 09/349772. In these invention, a swingable piece is matched with notches or buckling grooves at the periphery of a rotary disk for rewinding or positioned the communication wire. However, in these structures, the winding positioning and length of the communication wire can not be precisely controlled or predicted. Therefore, the user is possible to pull and release the communication wire many times. Although the function of the wire winding box does not be reduced, some troubles occurs to the user.

### SUMMARY OF THE INVENTION

Accordingly, the primary object of the present invention is to provide a wire winding box for using in a short distance, thereby, the components can be reduced greatly so that it can be assembled rapidly and conveniently for mass production.

Another object of the present invention is to provide a wire winding box for using in a short distance. A case with single receiving tank or two receiving tanks is pivotally installed with a rotary disk which is driven by a spiral spring. A communication wire firstly passes through a pivotal shaft for engaging with the rotary disk, then is bent through a proper angle of 90 degrees, then is pulled to a ring at the rotary disk, and then it is pulled out from the line outlet or is wound. Therefore, as the rotary disk rotates, the wire will wound around the ring for sliding and then wind around the pivotal shaft and the ring so as to be pulled out or rewound rapidly. Thereby, no conductive device is required to be placed in the wire winding box. The manufacturing process can be reduced greatly for mass production.

Another object of the present invention is to provide a wire winding box for using in a short distance, wheerein through the regular action of alternatively pulling and releasing, the wire can be positioned and rewound, and the user may clearly know the action of the wire. Therefore, the present invention can be used easily and conveniently.

A further object of the present invention is to provide a wire winding box for using in a short distance, a swingable piece and a ratchet wheel which are overlapped partially and can swing freely are pivotally installed in the receiving tank aside the rotary disk. As the rotary disk rotates, the swingable piece will control the rotation of the rear wheel in a special direction.

The various objects and advantages of the present invention will be more readily understood from the following detailed description when read in conjunction with the appended drawing.

### BRIEF DESCRIPTION OF THE DRAWINGS

Fig. 1 is an exploded perspective view showing the embodiment of the present invention which is formed as a single body.

Fig. 2 is an exploded perspective view showing the embodiment of the present invention which is formed as two bodies.

Fig. 3 is a perspective view showing that the present invention is presented as two bodies, and two wire ends of a communication wire protrudes out the line outlets from the same side of the case.

Fig. 4 is a perspective view showing that the present invention is presented as two bodies, and two wire ends of a communication wire protrudes out the line outlets from the different sides of the case.

Fig. 5 is a perspective view which is identical to that shown in Fig. 4, while the wire end of the communication wire is assembled with a plug of a telephone.

Fig. 6 is a plane view showing the rotary disk of the present invention as the communication wire is pulled out.

Fig. 7 is a plane view showing the rotary disk of the present invention as the communication wire is rewound.

Fig. 8 is an exploded perspective view showing the second ring of the present invention being formed by a plurality of rollers.

Fig. 9 is a perspective view with respect to Fig. 8 showing that the rotary disk is wound by the communication wire.

Fig. 10 is a plane schematic view showing in the initial condition, the relative relation of the swingable piece and the ratchet wheel.

Fig. 11 is a plane schematic view showing as the communication wire is pulled out, the relative relation of the swingable piece and the ratchet wheel.

Fig. 12 is a plane schematic view showing as the communication wire is pulled out continuously, the relative relation of the swingable piece and the ratchet wheel.

Fig. 13 is a plane schematic view showing as the communication wire is released and rewound, the relative relation of the swingable piece and the ratchet wheel.

Fig. 14 is a plane schematic view showing as the communication wire is caught and positioned, the relative relation of the swingable piece and the ratchet wheel.

Fig. 15 is a plane schematic view showing as the communication wire is pulled out again, the relative relation of the swingable piece and the ratchet wheel.

Fig. 16 is a plane schematic view showing as the communication wire is pulled out continuously again, the relative relation of the swingable piece and the ratchet wheel.

Fig. 17 is a plane schematic view showing as the communication wire is released and rewound again, the relative relation of the swingable piece and the ratchet wheel.

Fig. 18 is a plane schematic view showing as the communication wire can be rewound continuously, the relative relation of the swingable piece and the ratchet wheel.

### DETAILED DESCRIPTION OF THE PREFERRED EMBODIMENTS

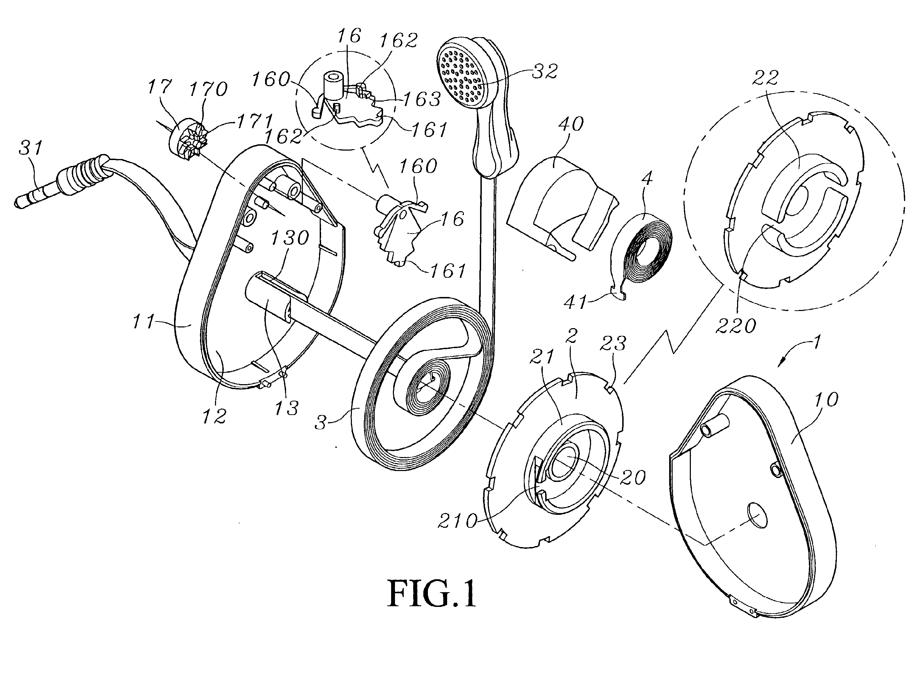

With reference to Fig. 1, a perspective view showing an embodiment of wire winding box for using in a short distance in the present invention is illustrated, wherein the wire winding box is formed by a single body. The wire winding box of the present invention includes a case 1, a rotary disk 2, a communication wire 3, and a spiral spring 4.

The case 1 is formed by combining a first half case 10 and a second half case 11 which are formed with an unique receiving tank 12. A pivotal shaft 13 is installed in the receiving tank 12. A pivotal shaft 13 and one lateral side of the case 1 are formed with line outlets 130 and 120, respectively. A rotary disk 2 is further installed in the receiving tank 12. The rotary disk 2 has a pivotal hole 20. Thereby, the rotary disk can be pivotally engaged in the pivotal hole for rotation. Two sides of the pivotal hole are installed with a first ring 21 and a second ring 22. The first ring 21 is installed with a hooking slot 210 for receiving an end hook 41 of the spiral spring 41 on the seat 40 outside of the rotary disk 2 so as to provide a restoring elasticity for the rotation of the rotary disk 2. The second ring 22 is installed with a slot 220. One end of the communication wire 3 passes through the line outlet 130 of the pivotal shaft 13, while the other line end is firstly bent through an angle of 90 degrees, then is toward the slot 220 of the second ring 22, and then protrudes from the line outlet 120 of the case 1. After the rotary disk 2 rotates, the communication wire 3 winds on the pivotal shaft 13 and the second ring 22 and then the hook 41 of the spiral spring 4 is hooked in the hook slot 210.

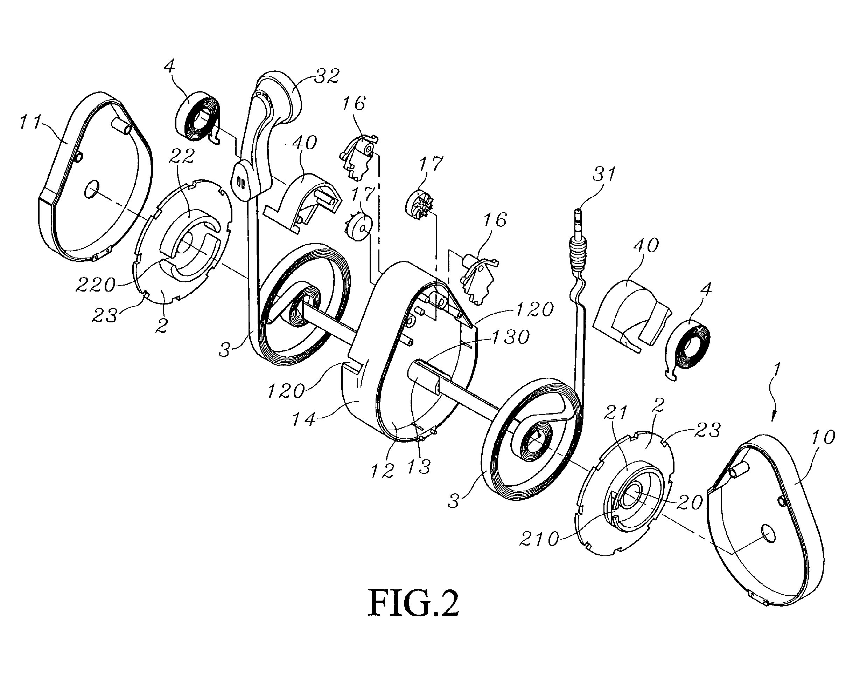

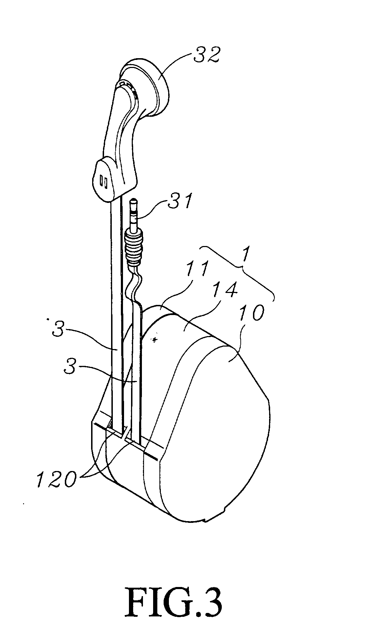

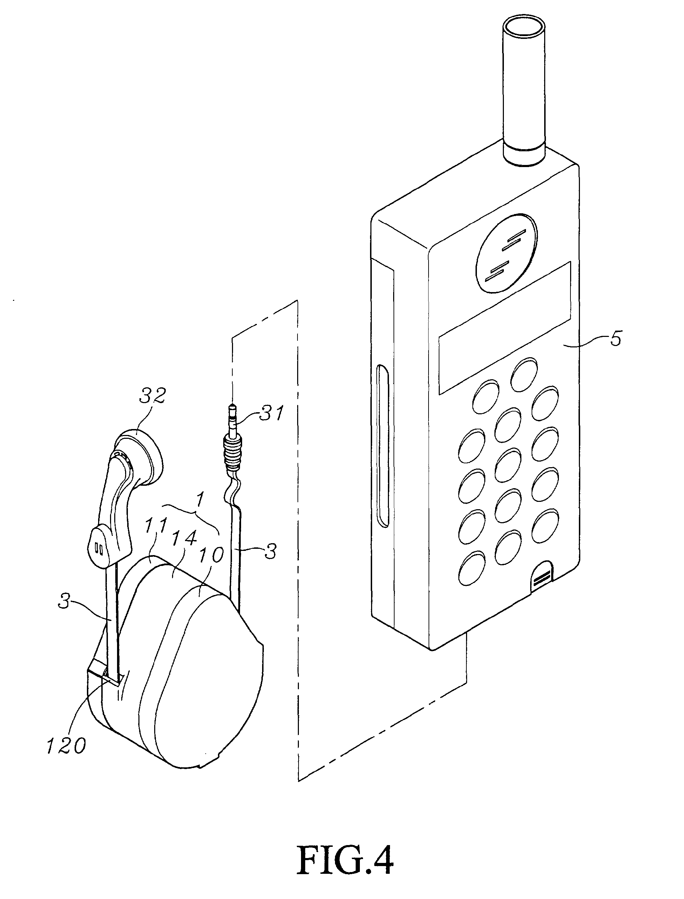

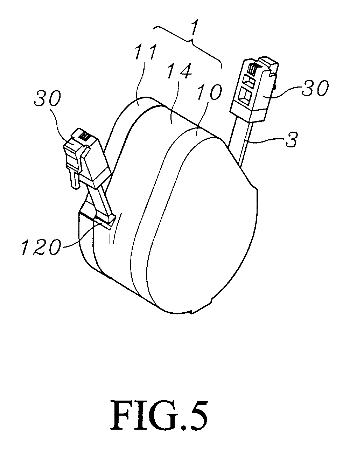

As shown in Fig. 2, an exploded perspective view showing an embodiment of wire winding box for using in a short distance in the present invention is illustrated, wherein the wire winding box is formed by double bodies. The basic structure of the present invention is identical to that in the first embodiment, except that the case 1 is formed by a first half case 10 and a second half case 20 which are placed at two sides of a central seat 14 so as to be formed as two receiving tanks 12. Each receiving tank 12 is arranged with a rotary disk 2 and a spiral spring 4. A single communication wire 3 passes through the line outlet 130 of the pivotal shaft 13 of the central seat 14, then is bent through an angle of 90 degrees, and then is pulled out from the second ring 22 of the rotary disk 2. Then, it is pulled out from the line outlet 120 for being used. In the rotary disk 2, the communication wire winds on the pivotal shaft 13 and second ring 22 and then is hooked to the spiral spring 4. The two line outlets 120 at the case 1 can be arranged at the same side as shown in Fig. 3, or is arranged at two different sides as shown in Figs. 4 and 5 for providing different pulling ways.

Despite of the aforesaid wire winding box of single or double bodies, the two terminals of the communication wire 3 can be assembled with any desired plugs, for example, the telephone plug 30 shown in Fig. 5, a RJ-45 network plug, the sound source plugs 31 shown in Figs. 1 to 4, or an earphone, the hand free earphone 32 with microphones shown in Figs. 1 to 4, etc.

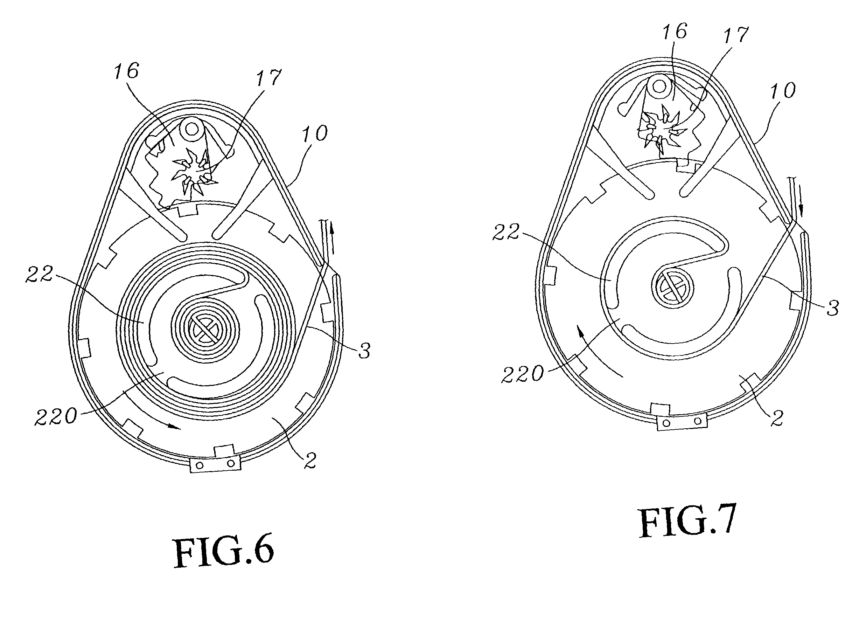

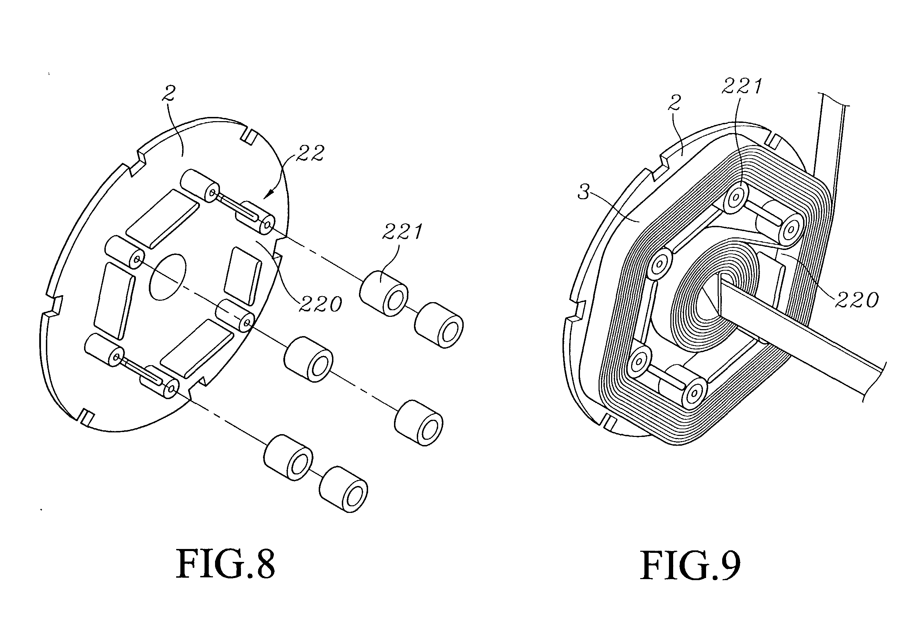

Therefore, the communication wire 3 passes through the pivotal shaft 13, and then is pulled directly to the second ring 22. As the rotary disk 2 rotates, a synchronous winding is generated. As the wire is rewound due to the action of the spiral spring 4, the communication wire 3 will wind on the pivotal shaft 3 and the second ring 22 at the same time. As the communication wire 3 is pulled out, as shown in Fig. 6, since at the time that the outer section of the communication wire 3 is pulled away from the second ring 22 with a larger diameter, the inner section of communication wire 3 will rotate synchronously so as to be pulled away from the pivotal shaft 13 with a smaller diameter. As the rotary disk 2 rotates, the lengths of the lines released from the second ring 22 and the pivotal shaft 13 are different, and therefore, the section of the communication wire 3 wound out of the second ring 22 will slide at a proper time so that the communication wire 3 can be pulled out continuously. Alternatively, as the communication wire 3 is released so that it can be rewound, and by the property that the second ring 22 and the pivotal shaft 13 have different diameters, the communication wire 3 can slide on the second ring 22 at a proper time so as to be wound around the pivotal shaft 13 and the second ring 22. Further, in order to increase the sliding of the communication wire 3 on the second ring 22, as shown in Figs. 8 and 9, the second ring 22 can be formed by a plurality of rollers 221 arranged as a circle for reducing the resistance of friction.

If the present invention is to be used, it is only needed to draw the plug at one end of the communication wire 3, then the communication wire can be pulled to a respective electronic device, such as a mobile phone, a computer, a telephone, a modem, etc. shown in Fig. 4., with a proper tension. Then, by the restoring elasticity of the spiral spring 4, the communication wire 3 will retain with a predetermined tension so as to reduce the length of the exposed wire without any intricate phenomenon.

It should be appreciated that a swingable piece 16 and a ratchet wheel 17 which are overlapped partially and can swing freely are pivotally installed in the receiving tank 12 aside the rotary disk 2. A plurality of buckling grooves 23 are installed at the periphery of the rotary disk 2. The swingable pieces 16 are installed with a tilt elastic piece 16 capable of resisting against the wall of the case are installed at two sides of the pivotal connection thereof. And, a tongue 161 is formed for opaquely resisting against the periphery of the rotary disk 2 or fallen into the buckling groove 23. The ratchet wheel 17 is installed with a plurality of ratchet teeth 170. Every other one ratchet tooth is installed with a buckling block 171. Two sides of the swingable piece 16 adjacent to the bottom of the ratchet wheel 17 each is installed with a catch 162. By the catch, as the swingable piece is swung, the ratchet tooth 170 can be pushed and then is engaged into a proper gap. Aside the catch 162 is installed with an engaging block 17 which can be engaged with the respective buckling block 171.

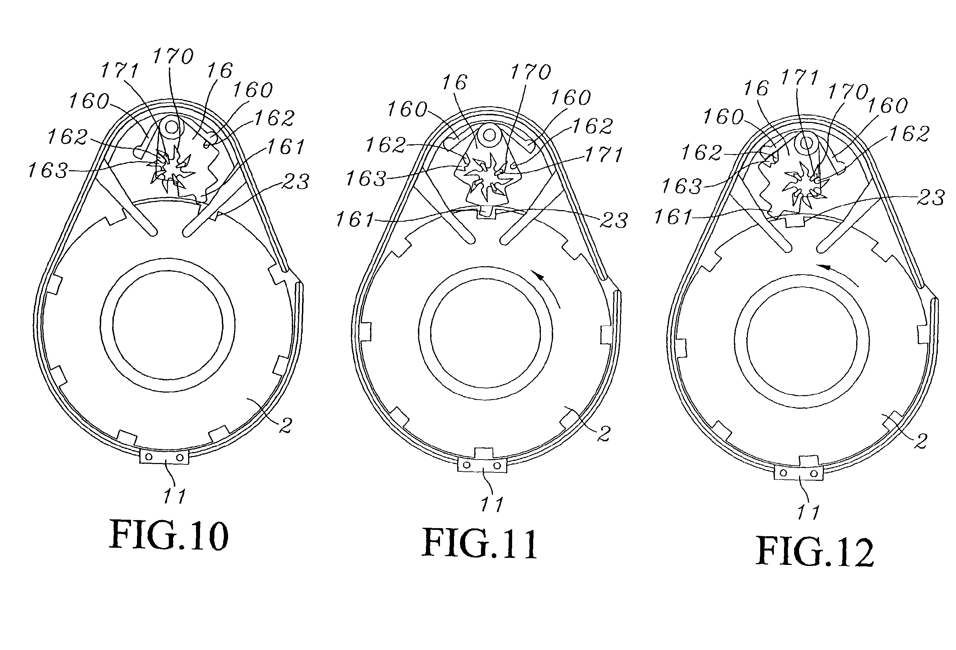

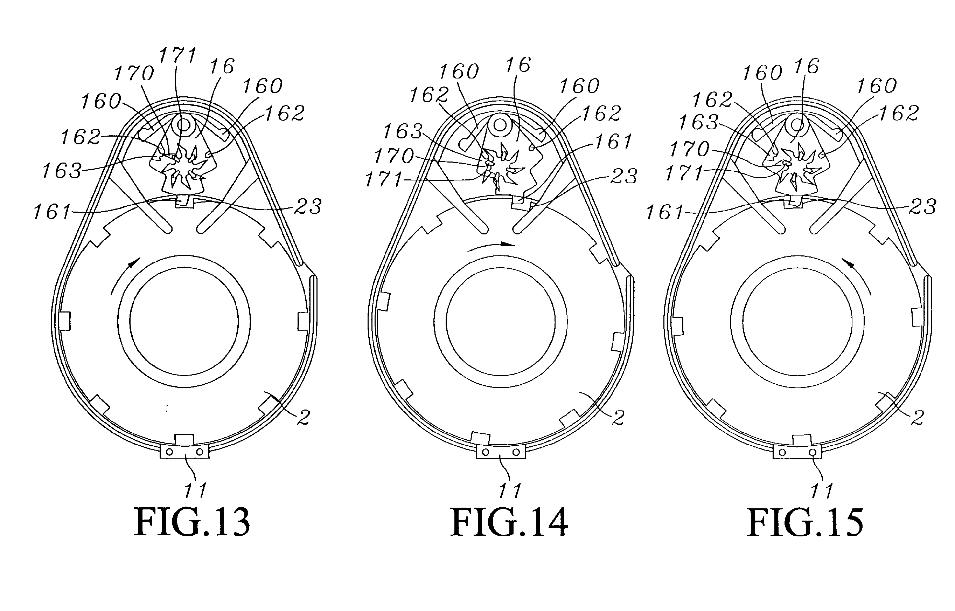

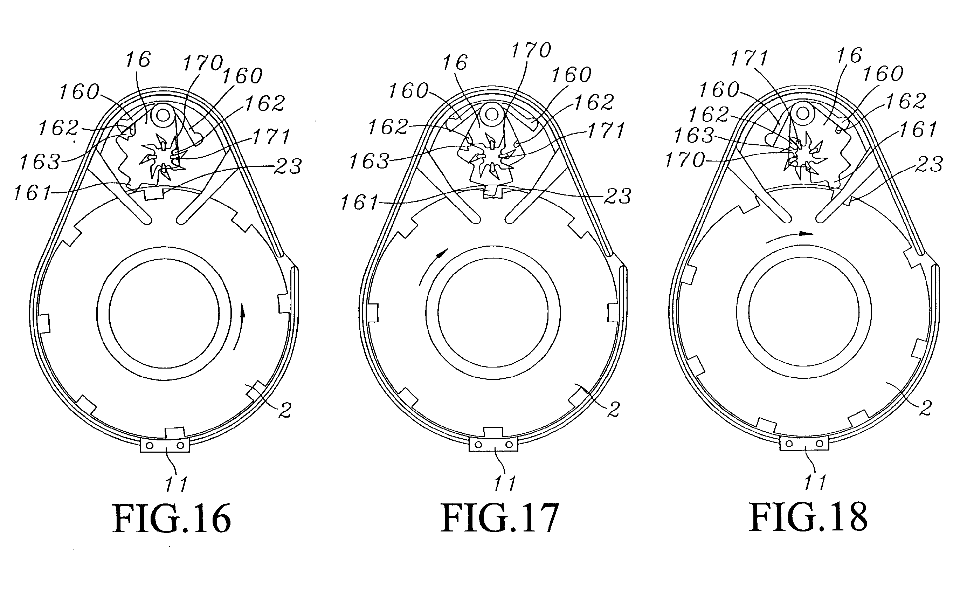

Thereby, as shown in Fig. 10, in the initial condition, the swingable piece 16 swings rightwards, and only the right catch 162 slides into the ratchet teeth 170 at the left side of the ratchet wheel 17. As the communication wire 3 is pulled out so that the rotary disk rotates counterclockwise at a proper position. The right elastic piece 160 will enforce the tongue 161 to buckle into the buckling groove 23 by the restoring elasticity thereof so that it is be pushed to cause the swingable piece 16 swings leftwards, as shown in Figs. 11 and 12. Then, the right catch 162 will push the left ratchet teeth 170 to move through a half gap and then is engaged and fixed thereon. At this condition, the rotary disk 2 can rotate continuously counterclockwise. Whereas the communication wire 3 is released so as to be rewound, as shown in Figs. 13 and 14, the swingable piece 16 similarly causes the tongue 16 to fall into the buckle groove 23 due to the elastic force of the left elastic piece 160, and then is pushed leftwards by the rotary disk rotating clockwise. Not only the left catch 162 will push the ratchet teeth 170 to move through half gap and then is engaged therein, but also the engaging block 163 will buckle the buckling block 171 of the ratchet wheel 171 so that the swingable piece 16 can not swing rightwards. Then, the rotary disk 2 is buckled so as not to wind the communication wire 3. Therefore, the communication wire is positioned. Thereafter, as the communication wire 3 is pulled out again, as shown in Figs. 15 and 16, the swingable piece 16 will be pushed leftwards again so to have a relation with the ratchet wheel 17 is identical as that shown in Fig. 12. That is, now the rotary disk 2 can rotate freely clockwise so that the communication wire 3 can be pulled out continuously. However, despite the length of the wire pulled out, once it is released, as shown in Figs. 17 and 18, the swingable piece 16 will swing rightwards to the initial condition shown in Fig. 10, it is different from that shown in Fig. 14 in which the swingable piece still swings rightwards. Namely, now only the left catch 162 is pushed and is engaged in the left ratchet teeth 170, but the engaging block 163 does not buckle into the buckling block 171. Thus, now the rotary disk 2 can rotate clockwise completely and the communication wire 3 can be wound freely and rapidly.

In summary, as the swingable piece 16 swings leftwards and rightwards once, then, by the catch 162, the ratchet wheel 17 rotates through one gap and by the special design that every two ratchet teeth 170 have a buckling block 171, despite the length of the wire having pulled out, when the user pulls out the communication wire 3 firstly, at first releasing the wire, it can be positioned. As the wire is pulled out again and then is released again, the wire can be rewound, and vice versa. Accordingly, through the regular action of alternatively pulling and releasing, the wire can be positioned and rewound, and the user may clearly know the action of the wire. Therefore, the present invention can be used easily and conveniently.

Accordingly, the wire winding box for using in a short distance disclosed in the present invention substantially simplify the structure and the pulled wire can be positioned effectively. Thus, the present invention no doubt completely conforms the requirement of inventive step and novelty.

Although the present invention has been described with reference to the preferred embodiments, it will be understood that the invention is not limited to the details described thereof. Various substitutions and modifications have been suggested in the foregoing description, and others will occur to those of ordinary skill in the art. Therefore, all such substitutions and modifications are intended to be embraced within the scope of the invention as defined in the appended claims.

## Claims

1. A wire winding box for using in a short distance comprising:
a case having at least one receiving tank with a pivotal shaft therein, and each side of the pivotal shaft and the case having a respective line outlet;
at least one rotary disk receiving the receiving tank and having a pivotal hole so as to be pivotally engaged to the pivotal shaft to pivotally rotate therein, two sides of the pivotal hole being installed with a first ring and a second ring, the first ring being formed with a hooking slot, and the second ring being installed with a slot;
at least one communication wire, one end of the communication wire passing through the line outlet of the pivotal shaft, while the other wire being firstly bent through a proper angle and then being pulled to the slot of the second ring; and then protruding out of another line outlet, as the rotary disk rotates, the communication wire can slide on the second ring so as to be wound around the pivotal shaft and the second ring;
at least one spiral spring receiving at the receiving tank aside the rotary disk, a hook end thereof being connected to the hooking slot of the first ring so as to provide an elasticity for restoring the rotation of the rotary disk.

2. The wire winding box for using in a short distance as claimed in claim 1, wherein the case is formed by a first half case and a second half case which is formed as a single receiving tank, a single rotary disk, a single communication wire, and a single spiral spring are arranged in the receiving tank.

3. The wire winding box for using in a short distance as claimed in claim 1, wherein the case is formed by a first half case and a second half case which are formed with two receiving tanks at two sides of a central seat, wherein each receiving tank is arranged with one said rotary disk and one said spiral spring, and a single communication wire passes through the line outlet of the pivotal shaft of the central seat, then after the wire is bent through a predetermined angle, the wire winds around the pivotal shaft and the second rings of the two rotary disks.

4. The wire winding box for using in a short distance as claimed in claim 1, wherein the second ring of the rotary disk is formed by a plurality of rollers which are arranged as a circle.

5. The wire winding box for using in a short distance as claimed in claim 1, wherein the communication wire has at least one wire end being connected with one of various types of plugs.

6. The wire winding box for using in a short distance as claimed in claim 1, wherein the communication wire has at least one wire end being assembled with a hand free earphone.

7. The wire winding box for using in a short distance as claimed in claim 3, wherein two ends of the communication wire protrude from two line outlets at the same side of the case.

8. The wire winding box for using in a short distance as claimed in claim 3, wherein two ends of the communication wire protrude from two line outlets at the different sides of the case.

9. The wire winding box for using in a short distance as claimed in claim 1, wherein a plurality of buckling grooves are installed at the periphery of the rotary disk; a swingable piece and a ratchet wheel which are overlapped partially and can swing freely are pivotally installed in the receiving tank aside the rotary disk, each swingable pieces installed with a tilt elastic piece capable of resisting against the wall of the case are installed at two sides of the pivotal connection thereof, a tongue is formed for opaquely resisting against the periphery of the rotary disk or falls into the buckling groove, the ratchet wheel is installed with a plurality of ratchet teeth, every other one ratchet tooth is installed with a buckling block, at two sides of the swingable piece adjacent to the bottom of the ratchet wheel each is installed with a catch, by the catch, as the swingable piece is swung, the ratchet tooth can be pushed and then is engaged into a proper gap, and aside the catch is installed with an engaging block which can engaged with the respective buckling block.
